Europäisches Patentamt

European Patent Office

Office européen des brevets

(11) Publication number: **0 174 286**
**B1**

(12) **EUROPEAN PATENT SPECIFICATION**

(45) Date of publication of patent specification: **31.10.90**

(51) Int. Cl.⁵: **F 03 B 3/14**

(21) Application number: **85850264.4**

(22) Date of filing: **23.08.85**

(54) Hydroturbine generator etc. having a device for adjusting the vane angles of a hydro turbine or a pump.

(30) Priority: **05.09.84 SE 8404443**

(43) Date of publication of application:
**12.03.86 Bulletin 86/11**

(45) Publication of the grant of the patent:
**31.10.90 Bulletin 90/44**

(84) Designated Contracting States:
**AT CH DE FR GB IT LI SE**

(56) References cited:
**CH-A- 170 547**
**CH-A- 435 162**
**FR-A-1 180 324**
**FR-E- 61 496**
**US-A-1 950 776**
**US-A-3 309 059**
**US-A-3 785 747**

(73) Proprietor: **Flygt AB**
**Box 1309**
**S-171 25 Solna (SE)**

(72) Inventor: **Eriksson, Roland**
**Stenasvägen 9**
**S-150 22 Nykvarn (SE)**

(74) Representative: **Larsson, Sten**
**Flygt AB Box 1309**
**S-171 25 Solna (SE)**

Courier Press, Leamington Spa, England.

## Description

This invention concerns a hydroturbine-generator or an electro motor-pump assembly according to the preamble of claim 1.

The following description concerns the generator concept only, but the theories are of course valid also for a pump connected in an electro motor or another energy source.

The assembly according to the preamble of claim 1 is disclosed in FR—A—1180324.

The hydro turbine comprises a rotating hub provided with a number of vanes and arranged in a tube or the like for flowing water. The rotary energy obtained is transmitted to a generator for producing electric current.

The rotary energy generated is of course entirely depending on the amount of flowing water as well as its potential energy, head. The water amount may vary considerably which means that the turbine will operate with different volume flows at different times. As the turbine is designed to have a maximum efficiency at a certain flow and a certain head, the energy of the water will be utilised more or less well.

By designing the vanes adjustable, which means that the vane angle with relation to the water flow may be varied, there is a possibility to optimise the efficiency within a relatively wide range of water amounts.

By known turbine plants, where the turbine via an elongated axis is connected to a "dry" generator, the adjustment of the vanes has been quite easy to obtain by help of hydraulic or mechanical transmission means along said axis.

Lately an entirely new type of turbine/generators has been introduced. The turbine and the generator are here integrated into one unit which may be easily hoisted up from the water tube for service. This type of energy generator is especially suitable by small volumes and relatively low heads.

When such a turbine should be provided with adjustable vanes, there arise specific problems if the advantage with the easy service possibilities should not be spoiled. According to the invention this is obtained by help of the arrangement defined in the claims.

FR—A—1180324 deals with a turbine generator of a conventional type which is mounted on site and must be demounted in pieces for service etc.

The non-rotating fairing behind the hub of the turbine is attached to the lower tube. This means that when demounting, the rotating unit must be parted from the non-rotating unit and hoisted up. Then the service man must go down into the tube to reach the remaining parts.

As the rotating unit must be parted from the non-rotating unit on site, the seal between these two parts must be of a simple nature which brings about risks for leakage into the internal machinery causing damages on the mechanisms.

According to the invention the entire unit can be taken up from the site for service. The entire unit includes rotating and non-rotating parts.

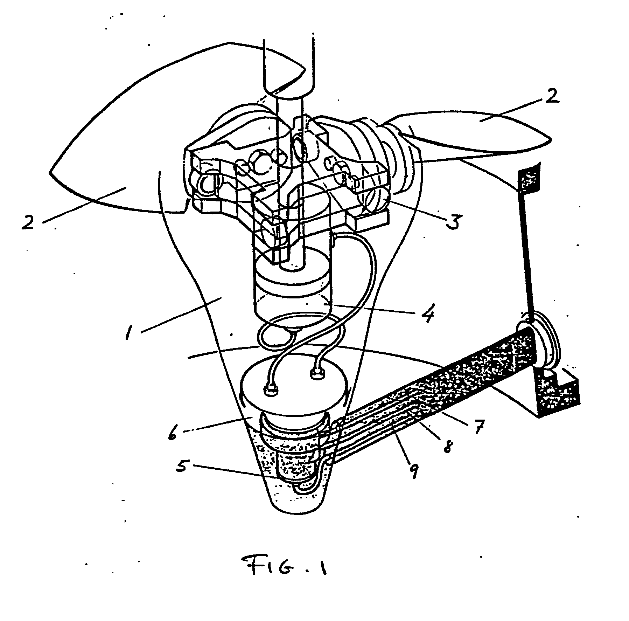

The invention is more closely described below with reference to the enclosed drawing which shows a partly cut view of a part of the hydraulic part is a submersible energy unit which also includes a generator.

In the drawings 1 stands for a hub and 2 for vanes turnably attached to the hub. 3 stands for mechanical transmission means, 4 a hydraulic cylinder, 5 a stationary fairing behind 6 a rotary part belonging to the hub 7, 8 and 9 finally stand for pressure medium tubes.

As mentioned above the entire machine is designed as a single unit easily mountable in a perferably vertical tube or shaft for the flowing water. This means of course great advantages when building the plants as well as during maintenance work. In order to profit as much as possible to this, it is of course important that also the means for obtaining the adjustment of the vanes are parts of the easily demountable unit. The device according to this invention makes this possible in an easy and reliable way.

Pressure medium is brought from a medium source via the tubes 7 and 8 into the stationary fairing, 5 behind the rotary unit. Said fairing is connected to the rotating part 6, the transition being sealed by a mechanical real device. This means that the rotary unit is submersible like all other parts in the device.

The unit consisting of the fairing 5 and the associated rotating part 6 may be an integrated part of the hub or its cone 1 or be attached in the latter. The pressure impulses are transmitted in a hydraulic cylinder 4, which also may be an integrated part of the hub. The movement of the hydraulic cylinder is transmitted via a mechanism 3 comprising links and slide guides to the attachments of the vanes 2 in the hub.

The building of the control mechanism has several great advantages. In addition to the integrated construction previously mentioned, the equipment may be designed independent of other means, such as a gear box, which may be mounted between the turbine and the generator.

The hydraulic control of the vane adjustment is variable and very exact. The location in the bottom part of the hub cone means in addition, that a drainage may be very easily obtained through the tube 9. Another advantage is that all reaction forces are internally absorbed.

## Claims

1. Hydroturbine-generator or electromotor-pump assembly comprising a device for adjusting the vane angles of the hydro turbine (or pump), the adjustment being performed by help of mechanical means contained in the rotating hub and acted upon by pressure medium via a hydraulic cylinder, said pressure medium being fed to the hub (1) of the turbine (pump) downstream the vanes in case of a turbine, (upstream in case of a pump), through a stationary fairing (5) in line with the hub to which the pressure medium source is connected and where the movement generated in the hydraulic cylinder mechanically actuates the turnable attachments of the vanes in the hub, characterized in that the assembly is designed as a submersible unit having an integrated generator (motor) in line with the hydraulic unit, the fairing (5) being connected with the other parts of the assembly, and that the partition between the rotating and non-rotating part of the rotary unit is sealed by help of a mechanical seal.

2. An assembly according to claim 1, characterized in that the adjustment force is transferred to the attachments of the vanes via links and slide guides.

## Patentansprüche

1. Wässerturbinengenerator oder Elektromotorpumpenanordnung mit einer Vorrichtung zum Einstellen der Schaufelwinkel der Wasserturbine (oder Pumpe), wobei die Einstellung mit Hilfe einer mechanischen Einrichtung erfolgt, die in der rotierenden Nabe enthalten ist und über einen hydraulischen Zylinder mit Druckmittel beaufschlagt wird, wobei das Druckmittel durch eine ortsfeste Werkleidung (5), die mit der mit der Druckmittelquelle in Verbindung stehenden Nabe ausgerichtet ist, der Nabe (1) der Turbine (Pumpe) an einer im Falle einer Turbine den Schaufeln nachgeordneten Stelle (im Falle einer Pumpe den Schaufeln vorgeordneten Stelle) zugeführt wird, und wobei die in dem hydraulischen Zylinder erzeugte Bewegung eine mechanische Betätigung der drehbaren Befestigungsteile der Schaufeln in der Nabe hervorruft, dadurch gekennzeichnet, daß die Anordnung als tauchbare Einheit mit einem mit der hydraulischen Einheit ausgerichteten, integrierter Generator (Motor) ausgebildet ist, wobei die Verkleidung (5) mit den anderen Teilen der Anordnung verbunden ist, und daß die Trennwand zwischen dem rotierenden und dem nicht-rotierenden Teil der Rotationseinheit mit Hilfe einer mechanischen Dichtung abgedichtet ist.

2. Anordnung nach Anspruch 1, dadurch gekennzeichnet, daß die Einstellkraft über Gestängeeinrichtungen und Schiebeführungen auf die Befestigungsteile der Schaufeln übertragen wird.

## Revendications

1. Turbo générateur ou ensemble formant électropompe comprenant un dispositif pour ajuster l'angle des pales de la turbine hydraulique (ou pompe), l'ajustement étant réalisé à l'aide de moyens mécaniques contenus dans le moyeu tournant et actionnés à l'aide d'un moyen de pression par l'intermédiaire d'un cylindre hydraulique, le moyen de pression étant délivre au moyeu (1) de la turbine (pompe) en aval des pales dans le cas d'une turbine, (en amont dans ls cas d'une pompe), à travers un carrénage stationnaire (5) en ligne avec la moyeu et auquel la source de moyen de pression est reliée, et dans lequel le mouvement engrendre dans la cylindre hydraulique agit mécaniquement sur les attaches tournantes des pales sur le moyeu, caractérisé en ce que l'ensemble est conçu comme une unité submersible ayant un générateur (moteur, intégré en ligne avec l'ensemble hydraulique, le carrenage (5) étant rélie avec les autres parties de l'ensemble, et en ce que la séparation entre la partie tournante et la partie non tournante de l'ensemble rotatif est rendue étandre à l'aide d'un joint mécanique.

2. Ensemble selon la revendication 1, caractérisé en ce que la force d'ajustement est transversée aux attaches des pales par l'intérmédiaire de bielles et de guides de coulissement.

FIG. 1